# EUROPEAN PATENT SPECIFICATION

(11) **EP 3 273 771 B1**
(45) Date of publication and mention of the grant of the patent: **30.12.2020**
(21) Application number: 15713435.4
(22) Date of filing: 26.03.2015
(51) Int. Cl.: A01G 25/16, G05D 16/06

(54) **PRESSURE REDUCING ELEMENT**
DRUCKMINDERUNGSELEMENT
ÉLÉMENT DE RÉDUCTION DE PRESSION

(43) Date of publication of application: 31.01.2018
(73) Proprietor: Husqvarna AB, 561 82 Huskvarna (SE)
(72) Inventor: MAAG, Markus, 89081 Ulm (DE); RENNER, Thomas, 89079 Ulm (DE)
(74) Representative: Finkele, Rolf
(86) International application number: PCT/EP2015/056488
(87) International publication number: WO 2016/150509

(56) References cited:
- FR-A- 1 073 745
- FR-A1- 2 539 523
- US-A- 3 815 636
- US-A- 3 849 864
- US-A1- 2006 166 750

## Description

The present invention relates to a pressure reducing device, a pressure regulating arrangement and an irrigation device.

In general pressure reducing devices are used to hold a defined water pressure at a constant value and to prevent the water pressure from exceeding a maximum allowable pressure which is necessary to prevent damage or to provide the best possible product performance, e.g. for the water distribution from sprinklers. Pressure reducing valves are in particular used in irrigation systems such as so called Microdrip systems with watering tubes having outlets distributed along their length as provided and sold by the company Gardena in the market or other irrigation systems with sprinklers, which may comprise pressure reducing valves integrated in the piston of the sprinkler.

Pressure reducing devices usually comprise several parts, including piston, spring and sealing elements, which are constructed and function based on hydraulic force imbalance caused by differing piston diameters. Linear movement of the piston is generated with sealing elements, which are however sensitive to dirt, e.g. sand or soil particles. Therefore, sealing elements may be subject to damages from dirt, resulting in leakage and deterioration of pressure regulating behavior. A change of the pressure regulating range is achieved by replacing the return spring by another spring with different spring elasticity or rigidity.

DE 10 2008 003 176 B3 discloses a connection device with a water pressure reduction function comprising a connection body with a stop section and a moving body which is able to control the flow rate. At both ends of the moving body, limiting spaces with sealing elements are provided, in such way, that the moving body can move automatically forward and rearward, so that the water pressure is reduced and stabilized. The reduction of the water pressure is achieved by the moving body which is able to close an inlet, thus, preventing inflow of water.

A valve that exhibits a pressure regulator for liquids and gases is described with FR 1 073 745 A. It makes use of two cooperating bellows that act on the pressure of incoming liquid such to keep the pressure at the output of the valve constant at a certain level FR2539523 illustrates for example another pressure regulator implementing a bellow.

An object of the invention is to provide a pressure reducing device for reducing fluid pressure with advantageous and reliable pressure reducing properties which is in particular dirt resistant and which is in particular easy to produce. It is further an object of the invention to provide an advantageous pressure regulation arrangement and an advantageous irrigation device.

The object of the invention may in particular be achieved by a pressure reducing device and a pressure regulation arrangement according to the corresponding claims.

Embodiments according to the invention are in particular disclosed and claimed in the attached claims. The dependencies or references back in the attached claims are chosen for formal reasons only. However any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

In an embodiment according to the invention a pressure reducing device is achieved according to claim 1.

Providing the first bellows as the resilient element allows for a sealing function or effect for the fluid now flowing inside the bellows, so that no gliding sealing rings are necessary any more for sealing the space where or through which the fluid flows. In other words, different e.g. to conventional spring elements and sealing rings, there are no parts subject to sliding friction which makes the pressure reducing device more resistant against abrasive particles carried by the fluid. The pressure reducing device may, thus, be more robust against dirt, such as sand.

The decrease movement followed by an increase movement in a repetitive or feedback or cycle mechanism or loop depending on the pressure of the fluid inside the passage element and the bellows leads to a control of the flow of fluid through the inlet orifice and thus to reduction of the outlet pressure of the fluid compared to the (higher) inlet pressure of the fluid.

In a preferred embodiment a hydraulic force (or: piston force) supports or causes the decrease movement between the passage element and the orifice element, the hydraulic force (or: pressure force) being generated, at hydraulic piston areas of the passage element and/or the first bellows, by the pressure difference between the pressure of the fluid inside the passage element and/or in the interior space of the first bellows on one hand and an external pressure, in particular of a medium, in an exterior space (or: balancing chamber) outside the passage element and/or outside the first bellows on the other hand. For instance, at a given constant pressure difference, the hydraulic force in the direction of the decrease movement is higher when the hydraulic piston area effective or pointing in that direction is higher as the hydraulic force is the product of the (constant) pressure difference and the piston area pointing in that direction.

This hydraulic force is, in particular, used to decrease the inlet orifice, thus reducing the (cross-section of the) inlet orifice and thus the flow of the fluid and consequently the pressure of the fluid.

Preferably the inlet orifice may even be completely closed or shut by providing co-operating stopping surfaces at the passage element and at the orifice element, which may get into contact with each other, preferably closing the inlet orifice at the instant of contact, e.g. by making both of them flat and parallel to each other. The movability of the passage element with respect to the orifice element is adapted to allow such (closing) contact. The flow of fluid is then completely stopped for a certain, usually short time and no pressure built up by fluid inside the passage element and/or the first bellows any more. The resulting pressure drop leads to a return or increase movement which opens the inlet orifice again, starting the pressure reduction feedback loop or mechanism again.

Preferably at least some of the folds of the first bellows extend with their outside surfaces into the exterior space, in which the external pressure prevails, so that the external pressure in the exterior space is applied to the outside surfaces of these folds, and the interior space of the first bellows extends into at least some of these folds, so that pressure of the fluid in the interior space is applied to the inside surfaces of these folds. By these measures the surfaces of these folds may, on average or when integrated, result in a mean or effective or residual hydraulic piston area pointing in the direction of the decrease movement and thus being effective in generating the hydraulic force for the decrease movement, when the pressure of the fluid is higher than the external pressure (of the medium) in the exterior space.

In an advantageous embodiment a mean or effective or residual or average hydraulic piston area of the first bellows being perpendicular to the decrease movement and/or to a longitudinal axis of the first bellows and pointing in the direction of the decrease movement and/or towards the orifice element is larger than the sum of all other hydraulic piston areas adjacent to the exterior space of the passage element or any other element movably connected with the bellows being perpendicular to the reduction movement or a longitudinal axis of the bellows and pointing in the direction of the increase movement and/or away from the orifice element.

The passage element may in particular be formed like or as a tube or like or as a hollow piston and/or be equipped with a outwardly extending part such as a flange comprising in particular a hydraulic piston area for the hydraulic force for the decrease movement.

The first bellows and the passage element may in particular be arranged in series in the flow path or passage of the fluid, the first bellows preferably being arranged downstream of the passage element.

In a preferred embodiment the pressure reducing device further comprises at least one further resilient element, formed as second bellows having several folds which supports or causes with its resilient force, in particular upon compressing or stretching deformation, the increase movement between the passage element and the orifice element. The second bellows may build up the restoring or resilient force in the increase movement upon an opposite deformation than the first bellows, i.e. upon compression while the first bellows is stretched or upon stretching when the first bellows is compressed.

The second bellows preferably also has a sealing function for the fluid against the exterior space.

In one embodiment the second bellows may be arranged in series with the passage element in the passage or flow path of the fluid, preferably upstream of the passage element. An interior space of the second bellows may in particular form a passage for the fluid, the folds forming a closed or sealing wall or casing of the interior space impermeable for the fluid.

However, in a preferred embodiment, the second bellows at least partly surrounds the passage element and/or an intermediate space between the passage element and the second bellows is or can be filled with the fluid the folds of the second bellows forming a closed or sealing wall or casing of the intermediate space impermeable for the fluid, the second bellows or its folds thus in particular forming a fluid tight gasket to the exterior space
In an embodiment at least some of the folds of the second bellows extend with their outside surfaces into an or the exterior space, in which the external pressure prevails, so that the external pressure in the exterior space is applied to the outside surfaces of these folds, and the intermediate space or interior space of the second bellows extends into at least some of these folds, so that pressure of the fluid in the intermediate space or interior space is applied to the inside surfaces of these folds. Thereby, preferably the surfaces of these folds may form or may, on average or when integrated, result in a mean or effective or residual hydraulic piston area, preferably pointing in the direction of the increase movement, and thus being effective in generating a hydraulic force, when the pressure of the fluid in the intermediate space or interior space is higher than the external pressure (of the medium) in the exterior space. The hydraulic piston areas of the first bellows and/or at the passage element will in this case normally be chosen larger than those of the second bellows to allow for a resulting hydraulic force effecting the decrease movement.

Typically, the fluid has an inlet pressure before entering the inlet orifice(s) which inlet pressure is higher than an outlet pressure of the fluid at the outlet orifice(s) and/or a pressure threshold that is lower than the inlet pressure and higher than the outlet pressure and preferably higher than the external pressure in the exterior space.

In the invention, the at least one resilient element and the passage element are formed integrally and/or in one single piece and are produced simultaneously in one forming process, in particular one injection-molding process, and/or in the same processing form, in particular mold. The resilient element may in this embodiment again be formed like a bellows but also in any other form such as a spring, in particular spiral spring or plate spring, in particular without a closed wall.

The at least one resilient element and/or the passage element are made of an, preferably the same, elastic plastics material, in particular a, in particular partially crystalline, thermoplastic elastic or even thermoplastic elastomer material. The preferred higher rigidity of the passage element compared to the elasticity of the bellows may be achieved by different strength or thickness of the material. Also in a two-step-molding process two different plastics materials for the passage element and the bellows could be used in principle.

A resilient element and a passage element made of a plastics material improve the pressure reducing device by making it resistant against corrosion. Further, such a pressure reducing device may be used for a liquid which comprises abrasive particles, such as sand, and is, therefore resistant against abrasion, in particular in case of a self-sealing bellows. Furthermore, such a pressure reducing element can be manufactured in an easy and economic way, e.g. in a plastics moulding process.

In an embodiment for easy manufacture the folds of the bellows are helically arranged or formed so as to allow for a turning or screw-like removal of the bellows from the processing form, thus with low deforming force.

It is also possible to provide parallel folds which however require higher deforming forces to remove them from the processing or molding form.

In the invention, the pressure reducing device further comprises at least one rigid element for supporting the orifice element, the passage element and the resilient element or first bellows and the second bellows, being formed integrally and/or in one single piece and/or are produced simultaneously in one forming process, in particular one injection-molding process, and/or in the same processing form, in particular mold. In a further embodiment next to its support function for the orifice element, the passage element and the resilient element or first bellows and in particular the second bellows the rigid element at the same time also forms the housing of the pressure reducing element. Thus protecting the elements it supports from dirt or destructive forces. It is possible to form the housing with wall elements connected to the housing with hinged structures so that it is possible to open the housing and to access the resilient element or first bellows and in particular the second bellows inside.

Preferably the orifice element is fixedly attached to the rigid element and preferably the passage element is attached to the rigid element in such way that said passage element can move towards and away from the the orifice element, in particular in that the passage element is attached to the rigid element via the resilient element or first bellows and in particular also the second bellows.

In particular the rigid element is arranged within a housing enclosing the exterior space which is sealed by means of seals or of sealing portions of the rigid element.

In a preferred embodiment in order to set the second pressure range and/or the first pressure range and/or the pressure threshold or the pressure reduction of the device the orifice element can be arranged at at least two different distances relative to the passage element in an idle or equilibrium position of the passage element, in particular with the pressure difference being zero, thereby varying the initial inlet orifice.

The orifice element may be arranged within and/or connected to, in particular via webs, a fastening portion, wherein the fastening portion is releasably fixed to the rigid element, in particular to a seat formed by the rigid element, in particular by a plug-in connection or a snapping connection or by a threaded connection.

The orifice element may also be integrally connected to the rigid element, in particular by an integral hinge which allows fixing and releasing of the fastening portion to and from an operating position at, within or on the rigid element.

In one embodiment the orifice element may be arranged at at least two different distances to the passage element, in an idle or equilibrium position of the passage element, in particular with the pressure difference being zero, by arranging the fastening portion in at least two different positions with respect to the rigid element, in particular by axial movement, in particular by a screwing movement in said thread connection, or by turning or arranging or switching the fastening portion upside down between two opposite positions at the rigid element, wherein the orifice element is preferably arranged non-symmetrically, e.g. closer to one axial end than to the other, within the fastening portion.

In an embodiment of a pressure regulating arrangement comprising a pressure reducing device according to the invention at least one filter element for filtering particles from the fluid is provided, wherein the filter element comprises at least one top closure element which is provided at least partially as the orifice element of the pressure reducing device. Preferably the filter element comprises a substantially cylindrical filter body, in particular at least partially provided with a screen, wherein the top closure element partially seals the filter element in a liquid tight manner at least in an end section of the filter element which is arranged adjacent to the passage element. Furthermore the filter element may comprise rib elements which form supports which can be releasably fixed to the rigid element, preferably to a seat formed by the rigid element.

Furthermore an irrigation device, including in particular garden sprayer(s) or garden nozzle(s), oscillating sprinkler(s), wide range sprinkler(s), circular sprinkler(s) and/or irrigation supply line, is suggested comprising a pressure reducing device or a pressure regulating arrangement according to the invention.

It is in particular possible to provide the pressure reducing device as one part which enables easy handling and mounting. All relevant components for the pressure reducing function can be provided integrally.

The present invention will be described further in the following also with reference to the accompanying drawings:
- FIG 1: illustrates, in a sectional view, a pressure regulating arrangement with an embodiment of a pressure reducing device according to the invention;
- FIG 2: illustrates, in a partially sectional and partially perspective view, a pressure regulating arrangement with a further embodiment of a pressure reducing device according to the invention;
- FIG 3: depicts, in a sectional view, a pressure regulating arrangement with a further embodiment of a pressure reducing device according to the invention;
- FIG 4: illustrates, in an enlarged detailed sectional view, an inlet orifice with an orifice element of a pressure reducing device according to a further embodiment of the invention;
- FIG 5: shows, in an enlarged detailed sectional view, an inlet orifice with an orifice element of a pressure reducing device according to a further embodiment of the invention;
- FIG 6: shows the orifice element of FIG 5 within its fastening portion turned upside down compared to FIG 5.

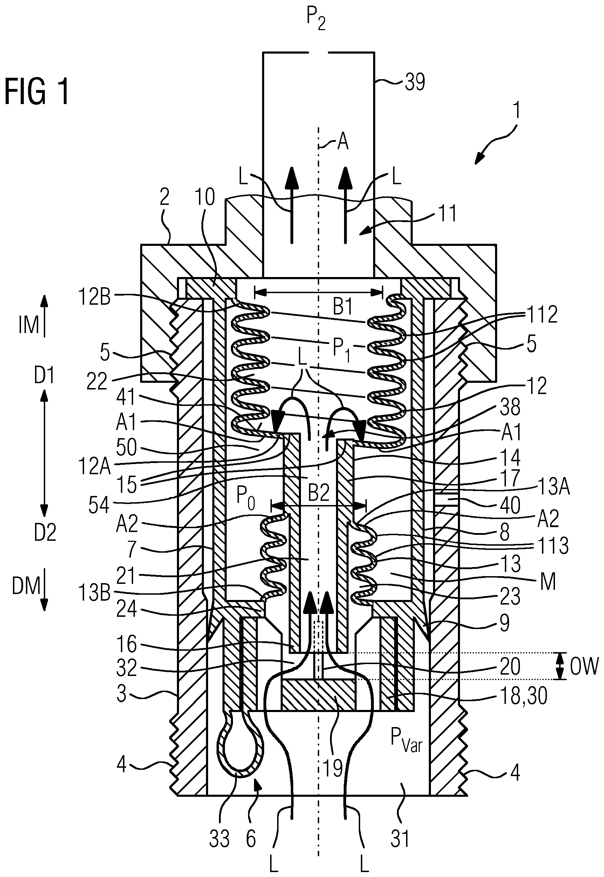

The same parts and quantities are designated with the same reference signs in FIG 1 to 6.

FIG 1 illustrates, in a sectional view, a pressure regulating arrangement 1, comprising a first housing element 2 being attached to a second housing element 3, preferably by means of a threaded connection 5. The housing formed by the two connected housing elements 2 and 3 establishes an enclosure for liquid L to be supplied through an interior space 6 or channel within the housing and may in particular be of a tubular shape. Liquid L can enter the housing via an inlet 31 and can leave it via an outlet 11. A distributor 39, e.g. a spray nozzle or sprinkler, or any other liquid processing or irrigation device, in particular forming a hydraulic pressure resistance for the liquid L, may be releasably attached to the first housing element 2.

The housing (2 and 3) forms an interior space 6 in which a pressure reducing device (or: pressure reducing element) 7 is arranged for reducing the (static) pressure P_{Var} of or in the liquid L at the inlet 31 down to a lower or reduced, in particular pre-defined or pre-determined, pressure P₂ at the outlet 11. The pressure reducing device 7 comprises an inlet orifice 32 for liquid L having entered the interior space 67 through the inlet 31 to pass on into the pressure reducing device 7. By changing or controlling the cross-section of the inlet orifice 32 the pressure reduction or the reduced pressure P₂ can be set or controlled.

The pressure reducing device 7 comprises in particular a self-supporting rigid structure established by a plurality, at least two, rigid elements 8, e.g. formed by rigid ribs made for instance of plastic material. A first section, preferably end section, of the rigid structure comprises an axial sealing element 10 which is held or clamped in a fixed connection between a portion of the first housing part 2 and a portion of the second housing part 3. Thus, the rigid structure with can be fixed by screwing the housing parts 2, 3 together by means of the thread connection 5. In a second section of the rigid structure, a radial sealing element 9 is provided which abuts to an inner wall of the second housing part 3 (or: enclosing wall for the interior space 6), acting as a sealing gasket and preventing liquid from passing by the inlet orifice 32. Of course other rigid supporting or housing structures are possible, also closed structures like sealed housings or the like.

Further, the pressure reducing device 7 forms a passage 21, through which liquid L can pass in a flow path from inlet 31 to outlet 11. For forming the passage 21, the pressure reducing device 7 comprises a, preferably tubular, passage element (in particular piston) 14 having an inner channel 54, an orifice element 19 and at least one first bellows 12 having folds 112 and an inner space or chamber 22 for receiving and guiding the liquid L. The passage element 14 and the orifice element 19 and the at least one first bellows 12 are preferably all arranged and/or extend along a longitudinal axis A. The pressure of the liquid L inside the chamber 22 in the first bellows 12 is designated by P₁.

The inlet orifice(s) 32 is/are formed between a section, in particular an end section 16 or an end face thereof, of the passage element 14 and the orifice element 19.

The cross-section of the inlet orifice(s) 32 and thus of the flow of the liquid L through said orifice(s) 32 can be changed by a relative movement of the passage element 14 and the orifice element 19 at least along or axial to the longitudinal axis A whereby in particular an axial distance (or: orifice width) OW between the passage element 14 and the orifice element 19 is changed. The passage element 14 and the orifice element 19 are movable relative to each other in such a way, that the inlet orifice 32 or the distance OW is decreased by moving the passage element 14 and the orifice element 19 towards each other in a decrease movement DM and that the inlet orifice 32 or the distance OW is increased by moving the passage element 14 and the orifice element 19 away from each other in an increase movement IM. In other words, the inlet orifice width OW determines the amount of liquid L which is allowed to pass the inlet orifice 32. Thus, the flow rate of liquid L can be adjusted by increasing or reducing inlet orifice width OW.

The first bellows 12 is connected at a first end 12A with the passage element 14, preferably at an end section 15 at an opposite side to the end section 16, and at a second end 12B to the rigid structure, in particular to the axial sealing element 10.

An intermediate sealed or closed balancing chamber 50 is provided as an exterior space which is filled with a fluid compressible medium M, in particular a gas like e.g. air, under a pre-determined (static) pressure P₀, typically atmospheric pressure, which can be achieved by an air passage 40 in the housing. The medium pressure P₀ is smaller than the liquid pressure P₁ of the liquid L in the chamber 22 of the first bellows 12. This balancing chamber 50 is enclosed by or formed between, on the inside, the outer walls of the two bellows 12 and 13 and the outside of the intermediate portion of the passage element 14 between the end section 15 and the connection to the second bellows 13 at the central section 17 which all form closed and sealing walls not permeable to neither the medium M nor the liquid L, and, on the outside, the inner wall of the housing, in particular the second housing element 3, and, at one axial end, the axial sealing element 10 and, at the other axial end, the seat 24 and the sealing element 9.

The balancing chamber 50 extends and thus the medium M enters into the intermediate space between the folds 112 from the outside and the inner chamber 22 extends and thus the liquid L enters into the folds 112 from the inside.

Thus, the pressure difference P₁- P₀ between the pressure P₁ of the liquid L inside the folds 112 and the pressure P₁ of the medium M is effective at the folds 112, which then act with their corresponding hydraulic areas or piston areas in a superposition or integration of all folds 112 resulting in a hydraulic force. By hydraulic areas or piston areas areas are meant in which when a pressure difference is applied a hydraulic force is effected depending on the size of the area where the hydraulic force is the product of the pressure difference and the size of the area. The free surface of the outermost or most downward fold 112 facing the medium M in the direction D₂ or the direction of the decrease movement DM and acting as a hydraulic or piston area is designated by A1. The hydraulic force is indicated by the two arrows of the liquid L bending downwards, finally in the direction D₂. When averaging or integrating over all folds 112 of the first bellows 12 one can arrive at an effective piston area of approximately diameter B1 as shown in FIG 1.

A pressure difference P₁- P₀ between the liquid L and the medium M will therefore generate a hydraulic force by the first bellows 12 onto the passage element 14 in the direction D₂ or in the direction of the decrease movement DM which hydraulic force depends on the effective hydraulic or piston area (with the diameter B1 or the free piston area A1) of the first bellows 12.

Preferably also at least one second bellows 13, preferably extending along the longitudinal axis, having folds 113, preferably surrounding the longitudinal axia A, is provided. The second bellows 13 is also connected at a first end 13A with the passage element 14, preferably at a middle section 17 between both end sections 15 and 16, and at a second end 13B to the rigid structure, in particular to an annular part of a seat 24 extending inwardly which may be at the same axial position as the radial sealing element 9. In between the inner wall of the second bellows 13 and the outer wall of the portion of the passage element 14 extending from the connection to the second bellows 13 towards the second end portion 16 an intermediate space 23 is formed extending into the folds 113 and being in fluid connection with the inlet orifice 32 or the inlet 31, thus being filled with the liquid L which, however, does not flow through this intermediate space 23 as it is closed at the end where the second bellows 13 is connected to the passage element 14. The pressure of the liquid L in this intermediate space 23 is usually at least close to or practically the same as the pressure P₁ within the first bellows 12. The outer wall of the second bellows 13 faces the balancing chamber 50 the folds 113 extending into the balancing chamber 50 and the medium M thus being present in between the folds 113. The free surface of the outermost or most upward fold 113 facing the medium M in the direction D₁ or the direction of the increase movement IM and acting as a piston area is designated by A2. When averaging or integrating over all folds 113 of the second bellows 13 one can arrive at an effective hydraulic or piston area of approximately diameter B2 of the second bellows 13 as shown in FIG 1.

The first bellows 12 as well as the second bellows 13 may, by stretching or compressing of their respective folds 112 and 113, be elastically deformed in both axial moving directions D₁ and D₂ with regard to an equilibrium or nondeformed state or middle position. This deformation is achieved by means of the hydraulic forces due to pressure differences between the pressure P₁ of the liquid L inside the bellows 12 and 13 and the pressure P₀ of the compressible medium M outside the bellows 12 and 13 in the balancing chamber 50. The elastic deformation generates, on the other hand, a restoring or resilient or return force in the opposite direction of the deformation, i.e. a force in direction D₁, if deformation happened in direction D₂, and *vice versa.*

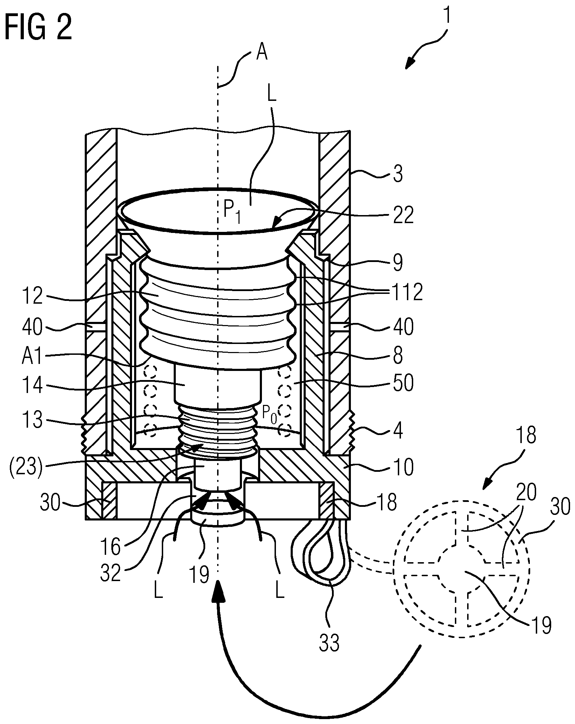

This restoring or return (or: resilient) force serves in particular to reset or return the passage element 14 into an upper or base position with maximum orifice width OW or into an end position of the increase movement IM when the liquid pressure P₁ is not present or not significantly higher than the medium pressure P₀, so that the reaction time of the pressure reducing device is shortened. The second bellows 13, although not strictly necessary, may help in particular to more quickly reset or return, by its restoring or return (or: resilient) force, the passage element 14. Other than or in addition to a second bellows 13 also a separate spring may be provided, as for instance shown in dashed lines in FIG 2.

The passage element 14 is held in a central position around and parallel or axial to the longitudinal axis A, in particular, within the rigid structure by means of the two bellows 12 and 13, in particular coaxially with the second bellows 13, but due to the axial deformability of the bellows 12 and 13 the passage element 14 can be moved axially for the increase movement IM or decrease movement DM.

Now, the movement and axial position of the passage element 14 depends on the resulting force which results from or as the vector sum of the piston or hydraulic forces, i.e. forces resulting from the pressure differences between the pressure P₁ of the liquid L inside the bellows 12 and 13 and the pressure P₀ of the compressible medium M outside the bellows 12 and 13 in the balancing chamber 50 of the first bellows 12 and if present the second bellows 13, on one hand and the elastic restoring or return forces of the first bellows 12 and, if present, the second bellows 13 on the other hand. A feedback allowing for a regulation or control of the orifice 32 and its width OW and, thus, of the flow of the liquid L and hence a controlled reduction of the pressure in the liquid can be achieved by these forces. This function of the pressure reducing device 1 will now be explained.

Let's assume, in the beginning, the pressure reducing device 7 is in its resting position or state, no liquid L applied, the bellows 12 and 13 are in a relaxed or low tension state, the passage element 14 thus is in a starting or idle or equilibrium position with open orifice(s) 32 with large orifice width OW.

Now, liquid L, e.g. from a water supply line, is applied at the inlet 31 having an inlet pressure Pᵥₐᵣ that is too high or can vary due to pressure irregularities in the supply line and needs to be reduced and evened to a pre-determined lower maximum pressure P₁, for instance an intended operating pressure P₁ for a device such as a distributor 39 which is not adapted to such high pressure.

The liquid L enters the passage element 14 of the pressure reducing device 7 through the orifice 32 and enters the internal chamber 22 of the first bellows 12.

In parallel the liquid L enters and fills the intermediate space 23 between the passage element 14 and the inner side of the second bellows 13.

The initially high pressure P₁ of the liquid L inside the first bellows 12 causes a resulting or effective hydraulic force in the direction D₂ of the decrease movement DM, as, although the pressure P₁ of the liquid L in both bellows 12 and 13 and thus the pressure difference P₁ - P₀ to the pressure P₀ in the balancing chamber 50 is basically the same, the larger effective piston area of the first bellows 12 compared to the second bellows 13 results in a larger hydraulic force in the direction D₂ of the decrease movement DM than in the direction of the increase movement IM.

A decrease movement DM of the passage element 14 is effected which leads to a decrease in the orifice width OW and thus a decrease in the flow rate of the liquid L which in turn results in a drop in the pressure pressure P₁ of the liquid L. Consequently, the hydraulic force in the direction D₂ of the decrease movement DM becomes smaller and is eventually, depending on the characteristics of the bellows and on the maximum orifice width OW, compensated by the increasing elastic restoring forces, namely the pulling or stretching force of the the first bellows 12 and the compression force of the second bellows 13, or preferably vanishes for a short time when the end face of the end section 16 of the passage element 14 hits or contacts the orifice element 19 in a closing manner, closing the orifice 32 completely, so that the flow of liquid is practically interrupted. This interruption of the liquid flow or closing of the orifice 32 is enabled or supported by an adaption of the contacting surface of the end face of the end section 16 of the passage element 14 and the contacting or stopping surface of the orifice element 19, which preferably are both chosen to be flat and orthogonal to the longitudinal axis A. In this case the internal pressure P₁ drops to atmospheric pressure equal to external pressure P₂ and thus only the elastic restoring forces of the bellows 12 and 13 are active and return ore move the passage element 14 in the direction D₁ of the increase movement IM.

Now the orifice 32 opens again as the width OW increases, liquid L streams into the pressure reducing device 7 again and the pressure or piston or hydraulic force of the first bellows 12 in the direction D₂ of the decrease movement DM is, usually rapidly, built up again forcing the passage element 14 back into a decrease movement DM, when the hydraulic force exceeds the resilient forces which decrease during the increase movement IM.

By this feedback mechanism the orifice width OW and thus the pressure P₁ is regulated or controlled within a certain interval. As this feedback mechanism is *per se* known in pressure reduction valves it is not further described in detail.

All joints between bellows 12, 13 and joining components are liquid tight as well as the bellows 12, 13 themselves. Both bellows 12, 13, or only one of them, may in particular comprise parallel folds 112 or 113, in particular surrounding the longitudinal axis A without a pitch or in planes orthogonal to the axis A, or may comprise helical folds 112 or 113, in particular surrounding the longitudinal axis A with a pitch along a helix like a thread.

The bellows 12 and 13 are preferably formed by molding, in particular injection- molding, preferably from a thermoplastic sufficiently elastic material, in particular thermoplastic elastomer or partially crystalline thermoplastic material, wherein in case of parallel folds 112 forced demolding may be necessary, whereas in case of helical folds the demolding may take place by a screwing or helical movement, possibly be produced with threaded spindle technique.

The passage element 14 is preferably formed integrally, in particular in the same molding process or even by the same material, with the first bellows 12 and preferably also the second bellows 13 and preferably also the rigid structure, wherein the connections or joints are preferably formed integrally or simultaneously as well.

Also, in another embodiment, the passage element may be formed just by one or both or the bellows without any rigid tube element, so that the end section of a bellows forms the counterpart of the orifice element 19 at the orifice 32.

The one or more inlet orifices 32 and the orifice element 19 are preferably formed by or within an orifice element support 18, wherein, as can be seen best in FIG 2 depicted in dashed lines, the orifice element 19 may be a central circular disk-shaped element connected by, e.g. four, webs 20 to an outer annular fastening portion 30, wherein the orifices 32 are formed by passages between orifice element 19 and the end portion 16 of the passage element 14 and one or more, e.g. four, passages connecting the inlet orifice(s) 32 with the inlet 31 for the liquid L are formed between the fastening portion 30 and the orifice element 19 and the webs 20. The fastening portion 30 is fixed or clamped to the rigid structure, in particular seat 24, of the rigid structure of the pressure reducing device 7.

Further, fastening portion 30 and pressure reducing element 7 are connected to each other by means of an integral hinge 33, making orifice element 19 and fastening portion 30 captive in a demounted state.

FIG 2 illustrates a pressure regulating arrangement 1 with a pressure reducing device 7 provided for a different installation position compared to FIG 1. First and second bellows 12, 13 and passage element 14 are arranged similar as described with regard to FIG 1. However, rigid elements 8 are arranged in such way, that axial sealing element 10 sits on the rear end of the second housing part 3 and the radial sealing element 9 sits or abuts at a step-like structure of the interior wall of housing part 3. Thus, the pressure reducing device 7 is enabled to be positioned at the inlet end of second housing part 3 wherein, according to FIG 1, it may be positioned at the outlet end, also. Orifice element support 18 including fastening portion 30 and orifice element 19 is fixed to the rigid element 8 by means of an integral hinge 33. As shown in FIG 2, unlike in FIG 1, second bellows 13 may also have a smaller diameter than the section of the passage element 14 between the two bellows 12 and 13.

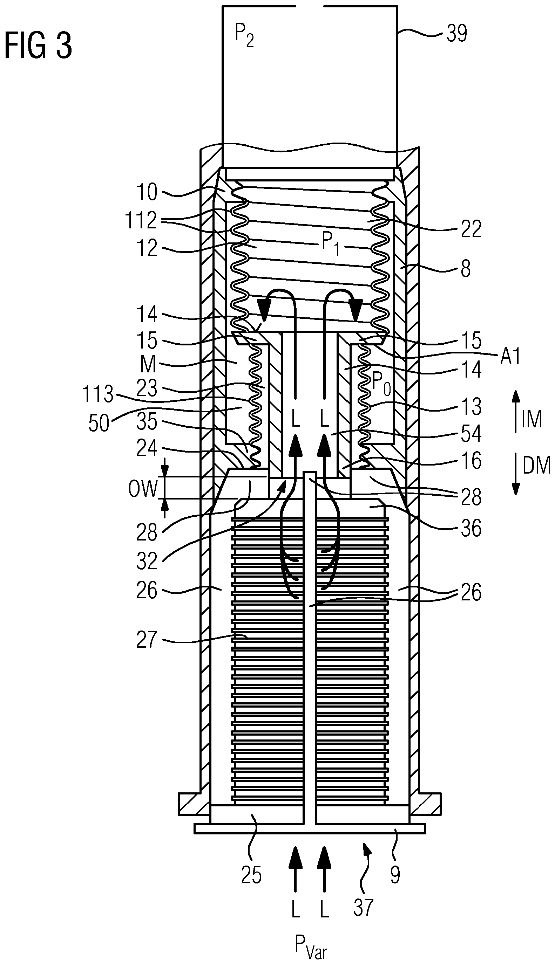

FIG 3 illustrates a pressure reducing device 7 comprising a rigid element 8 forming an axial sealing element 10, first and second bellows 12, 13 and passage element 14. There is only a flange-like annular part as an end section 15 of the passage element 14 in between the two bellows 12 and 13 and connected therewith and extending radially at least as far outward from the axis A as the first bellows 12. In this embodiment, the passage element 14 with its end section 15 defines the piston area or hydraulic area A1 for the hydraulic force for the decrease movement DM due to the pressure difference of the pressure P₁ inside and the pressure P₀ outside.

The rigid element 8 in FIG 3 comprises a support structure 35 arranged adjacent to the second end section 16 of passage element 14. Second end section 16 defines the inlet end of the pressure reducing device 7. The support structure 35 forms a seat or seats 24 to which supports 28 of a, preferably cylindrical, filter element 25 are in contact. The filter element 25 has four rib elements 26 distributed around its circumference. The rib elements 26 form said supports 28 in an end region of the filter element 25. The filter element 25 further comprises a screen 17 of cylindrical shape enclosing a hollow space.

Around a bottom opening 37, the filter element 25 forms a radial sealing element 9 which is able to seal with a surrounding sealing gasket or a surrounding housing wall (not shown), allowing liquid L only to enter filter element 25 through bottom opening 37. Thus, liquid L from the supply line enters the hollow space through a bottom opening 37 and leaves filter element 25 through screen 27, leaving particles and dirt within the filter element 25.

Top closure element 36 encloses the hollow space of filter element 25 at the top end preventing liquid L from elsewhere leaving the filter element 25 than through the screen 27. Top closure element 36 and second end section 16 of tubular element 14 define the limits or boundaries of the inlet orifice 32. In this embodiment the top of the filter 25 is used instead of the orifice element 19. Inlet orifice width OW is determined by the distance between top closure element 36 and second end section 16 of passage element 14. The possibility of axial movement of the passage element 14 corresponds to that of the embodiments according to FIG 1 and FIG 2. The inlet orifice width OW decreases and increases due to axial movement of the passage element 14.

A filter element 25 can be used as or instead of an orifice element 19 in all embodiments.

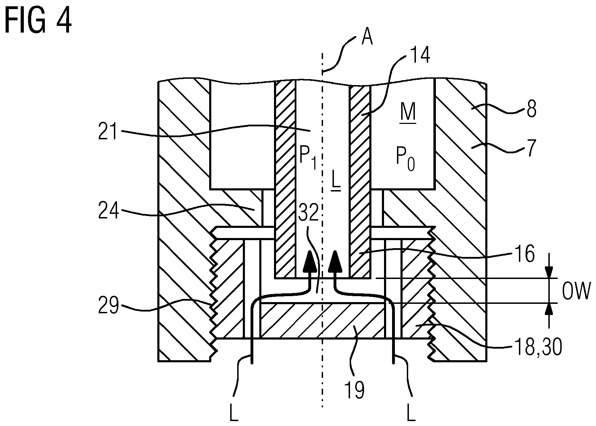

FIG 4 illustrates a detailed view of second end section 16 of passage element 14, orifice element 19 and rigid element 8. Rigid element 8 comprises a seat 24 with an internal thread 29. Passage element 14 is arranged such that orifice element 19 and second end section 16 of passage element 14 define the orifice 32 for letting liquid L into passage 21.

Orifice element support 18 preferably comprises an external thread for cooperation with internal thread realising a fixing thread or preferably in addition an adjustment thread 29 to adjust an initial inlet orifice width OW by positioning the orifice element 19 relative to the second end section 16 of passage element 14 in an idle or middle position of the passage element 14.

Thereby, the pressure reduction can be adjusted within a certain range, wherein a higher initial orifice width OW allows for a higher pressure reduction.

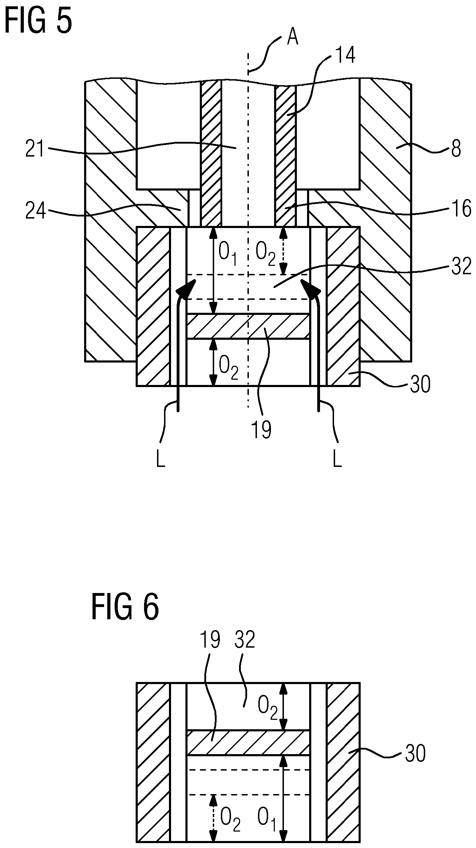

FIG 5 and 6 illustrate an additional or alternative embodiment for setting the pressure reduction to at least two different values. The orifice element support 18 comprises the fastening portion 30 and the orifice element 18 is arranged at a distance O1 from one axial end and O2 < O1 from the other axial end. Therefore, by mounting the orifice element support 18 in two positions upward or downward two different pressure reductions can be set.

In a first mounted position, as shown in FIG 5, orifice element 19 is arranged at distance O₁ from the end section of the passage element 14 and in a second mounted position, as shown in FIG 6, orifice element 19 is arranged at distance O₂ from the end section of the passage element 14, wherein in each case the passage element 14 is in a idle or middle or relaxed position, i.e. without liquid L being applied.

Although described for pressure reduction in a liquid L, the invention can equally be applied in case of another fluid such as for example a gas such as air, or an aerosol or a foam.

### References

- 1: pressure regulating arrangement
- 2: first housing part
- 3: second housing part
- 4: thread
- 5: thread connection
- 6: interior Space
- 7: pressure reducing device
- 8: rigid element
- 9: radial sealing element
- 10: axial sealing element
- 11: outlet
- 12: first bellows
- 13: second bellows
- 14: passage element
- 15: end section
- 16: end section
- 17: central section
- 18: orifice element support
- 19: orifice element
- 20: webs
- 21: passage
- 22: interior space
- 23: internal space
- 24: seat
- 25: filter element
- 26: rib elements
- 27: screen
- 28: supports
- 29: adjustment thread
- 30: fastening portion
- 31: inlet
- 32: inlet orifice
- 33: integral hinge
- 34: rear surface
- 35: support structure
- 36: top closure element
- 37: bottom opening
- 38: outlet orifice
- 39: distributor
- 40: air passage
- 41: pressure surface
- 50: balancing chamber
- 54: inner channel
- 112, 113: folds

- A: longitudinal axis
- L: liquid
- OW: orifice width
- O₁, O₂: first, second fixed distance
- D₁, D₂: moving directions
- B₁: mean diameter of first bellow
- B₂: mean diameter of second bellow
- P₀: first pressure
- P₁: second pressure
- P₂: third pressure
- P_{Var}: inlet pressure
- IM: increase movement
- DM: decrease movement
- M: medium

## Claims

1. Pressure reducing device (7) for reducing pressure in a fluid, in particular a liquid (L) such as water, in an irrigation device, comprising:
a) at least one passage element (14) for passage of the fluid (L) between at least one inlet orifice (32) and at least one outlet orifice (38),
b) at least one orifice element (19) and
c) at least one resilient element (12),
d) wherein the passage element (14) and the orifice element (19) are movable relative to each other in such a way, that, preferably in a feedback-loop, the inlet orifice (32) is decreased by moving the passage element (14) and the orifice element (19) towards each other in a decrease movement (DM) when the pressure of the fluid (L) is in a first pressure range and/or equal to or above a given pressure threshold, and that the inlet orifice (32) is increased by moving the passage element (14) and the orifice element (19) away from each other in an increase movement (IM), when the pressure of the fluid (L) is in a second pressure range below the first pressure range and/or below the pressure threshold,
e) wherein the at least one resilient element (12) supports or causes with its resilient force, in particular upon stretching or compressing deformation, the increase movement (IM) between the passage element (14) and the orifice element (19),
f) wherein at least one resilient element (12) is formed as a first bellows (12) having several folds (112),
g) wherein an interior space (22) of the first bellows (12) forms a passage for the fluid (L), the folds (112) forming a closed or sealing wall or casing of the interior space (22) impermeable for the fluid (L),
h) wherein the first bellows (12) is mechanically connected with the passage element (14) or is mechanically connected with the orifice element (19) or forms at least a part of the passage element (14),
i) wherein the pressure reducing device (7) further comprises at least one rigid element (8) for supporting the orifice element (19), the passage element (14) and the resilient element or first bellows (12) and a second bellows (13), **characterized in that**
ii) the pressure reducing device (7) is formed integrally and/or in one single piece and is produced simultaneously in one forming process,
j) wherein the folds (112) of the first bellows (12) and in particular the second bellows (13) are helically arranged or formed,
k) and wherein the at least one resilient element (12) and the passage element (14) are made of an elastic plastics material in a plastics molding process.

2. Pressure reducing device according to claim 1, wherein a hydraulic force supports or causes the decrease movement (DM) between the passage element (14) and the orifice element (19), the hydraulic force being generated, at hydraulic piston areas of the passage element (14) and/or the first bellows (12), by the pressure difference (P₁ - P₀) between the pressure (P₁) of the fluid (L) inside the passage element (14) and/or in the interior space (22) of the first bellows (12) on one hand and an external pressure (P₀) in an exterior space (50) outside the passage element (14) and/or outside the first bellows (12) on the other hand.

3. Pressure reducing device according to claim 2,
wherein at least some of the folds (112) of the first bellows (12) extend with their outside surfaces into the exterior space (50), in which the external pressure prevails, so that the external pressure in the exterior space is applied to the outside surfaces of these folds,
wherein the interior space (22) of the first bellows (12) extends into at least some of these folds (112), so that pressure of the fluid in the interior space is applied to the inside surfaces of these folds (112), whereby preferably the surfaces of these folds (112) form hydraulic piston areas in generating the hydraulic force and/or in particular the surfaces of these folds may, on average or when integrated, result in a mean or effective or residual hydraulic piston area pointing in the direction of the decrease movement and thus being effective in generating the hydraulic force for the decrease movement, when the pressure of the fluid is higher than the external pressure in the exterior space.

4. Pressure reducing device according to claim 3, wherein a mean hydraulic piston area of the first bellows being perpendicular to the decrease movement and/or to a longitudinal axis of the first bellows and pointing in the direction of the decrease movement and/or towards the orifice element is larger than the sum of all other hydraulic piston areas adjacent to the exterior space of the passage element or any other element movably connected with the bellows being perpendicular to the reduction movement or a longitudinal axis of the bellows and pointing in the direction of the increase movement and/or away from the orifice element.

5. Pressure reducing device according to any of claims 1 to 4 wherein as a further resilient element the at least one second bellows (13) has several folds (113) which supports or causes with its resilient force, in particular upon compressing or stretching deformation, the increase movement (IM) between the passage element (14) and the orifice element (19), wherein in particular the second bellows (13) may build up the resilient force in the increase movement upon an opposite deformation than the first bellows (12),
wherein the second bellows (13) preferably at least partly surrounds the passage element (14) and/or wherein preferably an intermediate space (23) between the passage element (14) and the second bellows (13) is or can be filled with the fluid (L) the folds (112) forming a closed or sealing wall or casing of the intermediate space (23) impermeable for the fluid (L), in particular a fluid tight gasket to the exterior space (50),
or
wherein in particular an interior space of the seconds bellows (13) forms a passage for the fluid (L), the folds (113) forming a closed or sealing wall or casing of the interior space impermeable for the fluid (L).

6. Pressure reducing device according to claim 5,
wherein at least some of the folds (113) of the second bellows (13) extend with their outside surfaces into an or the exterior space (50), in which the external pressure prevails, so that the external pressure in the exterior space is applied to the outside surfaces of these folds,
wherein in particular the intermediate space (23) or interior space of the second bellows (13) extends into at least some of these folds (113), so that pressure of the fluid in the intermediate space (23) or interior space is applied to the inside surfaces of these folds (113),
whereby preferably the surfaces of these folds (113) form hydraulic piston areas in generating a hydraulic force, in particular in the direction of the increase movement.

7. Pressure reducing device according to any of the preceding claims,
wherein the fluid (L) has an inlet pressure (Pᵥₐᵣ) before entering the inlet orifice(s) (32) which inlet pressure (Pᵥₐᵣ) is higher than an outlet pressure (P₁) of the fluid at the outlet orifice(s) (38) and/or wherein the pressure threshold is lower than the inlet pressure and higher than the outlet pressure and preferably higher than the external pressure in the exterior space.

8. Pressure reducing device (7) according to any of the preceding claims, the forming process is, in particular a one injection-molding process, and/or in the same processing form, in particular mold.

9. Pressure reducing device according to any of the preceding claims,
wherein the folds (112, 113) of the bellows (12, 13) are helically arranged or formed so as to allow for a turning or screw-like removal of the bellows (12, 13) from the processing form and/or at least one resilient element (13) and/or the passage element (14) are made of a plastics elastomer material, in particular a, in particular partially crystalline, thermoplastic elastomer material.

10. Pressure reducing device (7) according to any one of the preceding claims, wherein the at least one rigid element (8) is produced in one injection-molding process, and/or in the same processing form, in particular mold, wherein preferably the orifice element (19) is fixedly attached to the rigid element (8) and wherein preferably the passage element (14) is attached to the rigid element (8) in such way that said passage element (14) can move towards and away from the the orifice element (19), in particular in that the passage element (14) is attached to the rigid element (8) via the resilient element or first bellows (12) and in particular also the second bellows (13).

11. Pressure reducing device (7) according to any one of the preceding claims, wherein said orifice element (19) can be arranged at at least two different distances (O₁, O₂) relative to the passage element (14), in an idle or equilibrium position of the passage element (14), in particular with the pressure difference (P₁ - P₀) being zero, thereby varying the inlet orifice (32) in order to set the second pressure range and/or the first pressure range and/or the pressure threshold.

12. Pressure reducing device (7) according to any one of the preceding claims, wherein said orifice element (19) is arranged within and/or connected to, in particular via webs (20), a fastening portion (30), wherein the fastening portion (30) is releasably fixed to the rigid element (8), in particular to a seat (24) formed by the rigid element (8), in particular by a plug-in connection or a snapping connection or by a threaded connection and/or in that the orifice element (19) is integrally connected to the rigid element (8), in particular by an integral hinge which allows fixing and releasing of the fastening portion (30) to and from an operating position at, within or on the rigid element (8),
wherein in particular the orifice element (19) can be arranged at at least two different distances (O₁, O₂) to the passage element (14), in an idle or equilibrium position of the passage element (14), in particular with the pressure difference (P₁ - P₀) being zero, by arranging the fastening portion (30) in at least two different positions with respect to the rigid element (8), in particular by axial movement, in particular by a screwing movement in said thread connection, or by turning or arranging the fastening portion (30) upside down between two opposite positions at the rigid element (8), wherein the orifice element (19) is preferably arranged non-symmetrically within the fastening portion (30).

13. Pressure reducing device (7) according to any of the preceding claims, wherein, preferably to completely close the inlet orifice, co-operating stopping or contact surfaces are provided at the passage element and at the orifice element, which may get into contact with each other, preferably closing the inlet orifice at the instant of contact
and/or
wherein the passage element is formed like a tube or like a hollow piston and/or be equipped with a outwardly extending part such as a flange comprising in particular a hydraulic piston area for the hydraulic force for the decrease movement,
and/or
wherein the first bellows and the passage element are arranged in series in the flow path or passage of the fluid, the first bellows preferably being arranged downstream of the passage element.

14. Pressure regulating arrangement (1) comprising a pressure reducing device (7) according to any of the preceding claims and at least one filter element (25) for filtering particles from the fluid (L) wherein the filter element (25) comprises at least one top closure element (38) which is provided at least partially as the orifice element of the pressure reducing device (7), preferably wherein the filter element (25) comprises a substantially cylindrical filter body, in particular at least partially provided with a screen (27), wherein the top closure element (38) partially seals the filter element (25) in a liquid tight manner at least in an end section of the filter element (25) which is arranged adjacent to the passage element (14) and/or in that the filter element (25) comprises rib elements (26) which form supports (26) which can be releasably fixed to the rigid element (8), preferably to a seat (24) formed by the rigid element (8).

## Patentansprüche

1. Druckminderungsvorrichtung (7) zum Vermindern des Drucks in einem Fluid, insbesondere einer Flüssigkeit (L) wie Wasser, in einer Bewässerungsvorrichtung, umfassend:
a) mindestens ein Durchlasselement (14) für den Durchlass des Fluids (L) zwischen mindestens einer Eingangsöffnung (32) und mindestens einer Ausgangsöffnung (38),
b) mindestens ein Blendenelement (19) und
c) mindestens ein elastisches Element (12),
d) wobei das Durchlasselement (14) und das Blendenelement (19) relativ zueinander derart beweglich sind, dass, vorzugsweise in einer Rückkopplungsschleife, die Eingangsöffnung (32) durch Bewegen des Durchlasselements (14) und des Blendenelements (19) in einer Verkleiderungsbewegung (DM) aufeinander zu verkleinert wird, wenn der Druck des Fluids (L) in einem ersten Druckbereich und/oder gleich oder über einem gegebenen Druckschwellenwert liegt, und dass die Eingangsöffnung (32) vergrößert wird, indem das Durchlasselement (14) und das Blendenelement (19) in einer Vergrößerungsbewegung (IM) voneinander weg bewegt werden, wenn der Druck des Fluids (L) in einem zweiten Druckbereich unterhalb des ersten Druckbereichs und/oder unterhalb der Druckschwelle liegt,
e) wobei das mindestens eine elastische Element (12) mit seiner elastischen Kraft, insbesondere bei Streck- oder Stauchverformung, die Anstiegsbewegung (IM) zwischen dem Durchlasselement (14) und dem Blendenelement (19) unterstützt oder bewirkt,
f) wobei mindestens ein elastisches Element (12) als ein erster Balg (12) mit mehreren Falten (112) ausgebildet ist,
g) wobei ein Innenraum (22) des ersten Balgs (12) einen Durchlass für das Fluid (L) bildet, die Falten (112) eine geschlossene oder abdichtende Wand oder ein Gehäuse des Innenraums (22) bilden, die für das Fluid (L) undurchlässig sind,
h) wobei der erste Balg (12) mechanisch mit dem Durchlasselement (14) verbunden ist oder mechanisch mit dem Blendenelement (19) verbunden ist oder zumindest einen Teil des Durchlasselements (14) bildet,
i) wobei die Druckminderungsvorrichtung (7) ferner mindestens ein starres Element (8) zum Abstützen des Blendenelements (19), des Durchlasselements (14) und des elastischen Elements oder einen ersten Balg (12) und einen zweiten Balg (13) umfasst,
**dadurch gekennzeichnet, dass**
ii) die Druckminderungsvorrichtung (7) integral und/oder in einem einzigen Stück geformt ist und gleichzeitig in einem Formvorgang hergestellt wird,
j) wobei die Falten (112) des ersten Balgs (12) und insbesondere des zweiten Balgs (13) helikal angeordnet oder ausgebildet sind,
k) und wobei das mindestens eine elastische Element (12) und das Durchlasselement (14) aus einem elastischen Kunststoffmaterial in einem Kunststoff-Formverfahren hergestellt sind.

2. Druckminderungsvorrichtung nach Anspruch 1, wobei eine hydraulische Kraft die Verkleinerungsbewegung (DM) zwischen dem Durchlasselement (14) und dem Blendenelement (19) unterstützt oder bewirkt, wobei die hydraulische Kraft an hydraulischen Kolbenbereichen des Durchlasselements (14) und/oder des ersten Balgs (12) erzeugt wird, durch die Druckdifferenz (P₁ - P₀) zwischen dem Druck (P₁) des Fluids (L) innerhalb des Durchlasselements (14) und/oder im Innenraum (22) des ersten Balgs (12) auf der einen Seite und einem Außendruck (P₀) in einem Außenraum (50) außerhalb des Durchlasselements (14) und/oder außerhalb des ersten Balgs (12) auf der anderen Seite.

3. Druckminderungsvorrichtung nach Anspruch 2, wobei mindestens einige der Falten (112) des ersten Balges (12) sich mit ihren Außenflächen in den Außenraum (50) erstrecken, in dem der Außendruck vorherrscht, so dass der Außendruck im Außenraum auf die Außenflächen dieser Falten wirkt, wobei sich der Innenraum (22) des ersten Balgs (12) in mindestens einige dieser Falten (112) erstreckt, so dass der Druck des Fluids im Innenraum auf die Innenflächen dieser Falten (112) aufgebracht wird, wobei vorzugsweise die Oberflächen dieser Falten (112) bei der Erzeugung der hydraulischen Kraft Hydraulikkolbenflächen bilden und/oder insbesondere die Oberflächen dieser Falten im Mittel oder im integrierten Zustand eine mittlere oder wirksame oder restliche Hydraulikkolbenfläche ergeben können, die in Richtung der Verkleinerungsbewegung weist und somit bei der Erzeugung der hydraulischen Kraft für die Verkleinerungsbewegung wirksam ist, wenn der Druck des Fluids höher ist als der Außendruck im Außenraum.

4. Druckminderungsvorrichtung nach Anspruch 3, wobei eine mittlere Hydraulikkolbenfläche des ersten Balges, die senkrecht zur Verkleinerungsbewegung und/oder zu einer Längsachse des ersten Balges steht und in Richtung der Verkleinerungsbewegung und/oder in Richtung des Blendenelementes weist, größer ist als die Summe aller anderen Hydraulikkolbenflächen, die an den Außenraum des Durchlasselementes oder jedes anderen mit dem Balg beweglich verbundenen Elementes angrenzen, das senkrecht zur Verkleinerungsbewegung oder zu einer Längsachse des Balges steht und in Richtung der Vergrößerungsbewegung und/oder weg vom Blendenelement weist.

5. Druckminderungsvorrichtung nach einem der Ansprüche 1 bis 4, wobei als weiteres elastisches Element der mindestens eine zweite Balg (13) mehrere Falten (113) aufweist, der mit seiner elastischen Kraft, insbesondere bei einer Druck- oder Dehnungsverformung, die Vergrößerungsbewegung (IM) zwischen dem Durchlasselement (14) und dem Blendenelement (19) unterstützt oder bewirkt, wobei insbesondere der zweite Balg (13) die elastische Kraft bei der Vergrößerungsbewegung bei einer entgegengesetzten Verformung als der erste Balg (12) aufbauen kann, wobei der zweite Balg (13) das Durchlasselement (14) vorzugsweise zumindest teilweise umgibt und/oder wobei vorzugsweise ein Zwischenraum (23) zwischen dem Durchlasselement (14) und dem zweiten Balg (13) mit dem Fluid (L) gefüllt ist oder gefüllt werden kann,
wobei die Falten (112) eine geschlossene oder abdichtende Wand oder ein Gehäuse des Zwischenraums (23) bilden, die für das Fluid (L) undurchlässig sind, insbesondere eine fluiddichte Dichtung zum Außenraum (50),
oder
wobei insbesondere ein Innenraum des zweiten Balgs (13) einen Durchlass für das Fluid (L) bildet, wobei die Falten (113) eine geschlossene oder abdichtende Wand oder ein Gehäuse des Innenraums bilden, die für das Fluid (L) undurchlässig sind.

6. Druckminderungsvorrichtung nach Anspruch 5,
wobei sich mindestens einige der Falten (113) des zweiten Balgs (13) mit ihren Außenflächen in einen oder den Außenraum (50) erstrecken, in dem der Außendruck vorliegt, so dass der Außendruck im Außenraum auf die Außenflächen dieser Falten wirkt,
wobei sich insbesondere der Zwischenraum (23) oder Innenraum des zweiten Balgs (13) in mindestens einige dieser Falten (113) erstreckt, so dass der Druck des Fluids im Zwischenraum (23) oder Innenraum auf die Innenflächen dieser Falten (113) aufgebracht wird,
wobei vorzugsweise die Oberflächen dieser Falten (113) bei der Erzeugung einer hydraulischen Kraft, insbesondere in Richtung der Vergrößerungsbewegung, hydraulische Kolbenflächen bilden.

7. Druckminderungsvorrichtung nach einem der vorhergehenden Ansprüche, wobei das Fluid (L) einen Einlassdruck (Pᵥₐᵣ) vor dem Eintritt in die Eingangsöffnung(en) (32) aufweist, wobei der Einlassdruck (Pᵥₐᵣ) höher ist als ein Auslassdruck (P₁) des Fluids an der/den Auslassöffnung(en) (38) und/oder wobei die Druckschwelle niedriger als der Einlassdruck und höher als der Auslassdruck und vorzugsweise höher als der Außendruck im Außenraum ist.

8. Druckminderungsvorrichtung (7) nach einem der vorhergehenden Ansprüche, das Formverfahren ist insbesondere ein Ein-Spritzgussverfahren, und/oder in der gleichen Verarbeitungsform, insbesondere Gussform.

9. Druckminderungsvorrichtung nach einem der vorhergehenden Ansprüche, wobei die Falten (112, 113) der Bälge (12, 13) helikal angeordnet oder ausgebildet sind, um ein dreh- oder schraubenförmiges Herausnehmen der Bälge (12, 13) aus der Verarbeitungsform und / oder mindestens einem elastischen Element (13) und/oder dem Durchlasselement (14) aus einem Kunststoff-Elastomer-Material, insbesondere einem, insbesondere teilkristallinen, thermoplastischen Elastomer-Material, zu ermöglichen.

10. Druckminderungsvorrichtung (7) nach einem der vorhergehenden Ansprüche, wobei das mindestens eine starre Element (8) in einem Spritzgussverfahren und/oder in der gleichen Verarbeitungsform, insbesondere Gussform, hergestellt wird, wobei vorzugsweise das Blendenelement (19) fest mit dem starren Element (8) verbunden ist und wobei vorzugsweise das Durchlasselement (14) mit dem starren Element (8) derart verbunden ist, dass sich dieses Durchlasselement (14) auf das Blendenelement (19) zu und von diesem weg bewegen kann, insbesondere dadurch, dass das Durchlasselement (14) über das elastische Element oder den ersten Balg (12) und insbesondere auch den zweiten Balg (13) mit dem starren Element (8) verbunden ist.

11. Druckminderungsvorrichtung (7) nach einem der vorhergehenden Ansprüche, wobei das Blendenelement (19) in mindestens zwei verschiedenen Abständen (O1, O2) relativ zu dem Durchlasselement (14) in einer Leerlauf- oder Gleichgewichtsposition des Durchlasselements (14) angeordnet werden kann, insbesondere wenn die Druckdifferenz (P1 - P0) Null ist, wodurch die Eingangsöffnung (32) variiert wird, um den zweiten Druckbereich und/oder den ersten Druckbereich und/oder die Druckschwelle einzustellen.

12. Druckminderungsvorrichtung (7) nach einem der vorhergehenden Ansprüche, wobei das Blendenelement (19) innerhalb eines Befestigungsabschnitts (30) angeordnet und/oder mit diesem verbunden ist, insbesondere über Stege (20), wobei der Befestigungsabschnitt (30) lösbar an dem starren Element (8), insbesondere an einem durch das starre Element (8) gebildeten Sitz (24), befestigt ist, insbesondere durch eine Steckverbindung oder eine Schnappverbindung oder durch eine Schraubverbindung und/oder dadurch, dass das Blendenelement (19) integral mit dem starren Element (8) verbunden ist, insbesondere durch ein integrales Scharnier,
das ein Fixieren und Lösen des Befestigungsabschnitts (30) in und aus einer Betriebsposition an, in oder auf dem starren Element (8) ermöglicht,
wobei insbesondere das Blendenelement (19) in mindestens zwei unterschiedlichen Abständen (O1, O2) zu dem Durchlasselement (14) in einer Ruhe- oder Gleichgewichtsposition des Durchlasselements (14), insbesondere bei einer Druckdifferenz (P₁ - P₀) von Null, angeordnet werden kann, indem der Befestigungsabschnitt (30) in mindestens zwei unterschiedlichen Positionen in Bezug auf das starre Element (8) angeordnet wird, insbesondere durch axiale Bewegung, insbesondere durch eine Schraubbewegung in der Gewindeverbindung, oder durch Drehen oder Anordnen des Befestigungsabschnitts (30) umgekehrt zwischen zwei gegenüberliegenden Positionen an dem starren Element (8), wobei das Blendenelement (19) vorzugsweise unsymmetrisch innerhalb des Befestigungsabschnitts (30) angeordnet ist.

13. Druckminderungsvorrichtung (7) nach einem der vorhergehenden Ansprüche, wobei, vorzugsweise zum vollständigen Verschließen der Einlassöffnung, zusammenwirkende Anschlag- oder Kontaktflächen am Durchlasselement und am Blendenelement vorgesehen sind, die miteinander in Kontakt kommen können, wobei vorzugsweise die Einlassöffnung im Moment des Kontaktes verschlossen wird und/oder
wobei das Durchlasselement wie ein Rohr oder wie ein Hohlkolben ausgebildet ist und/oder mit einem sich nach außen erstreckenden Teil wie einem Flansch ausgestattet ist, der insbesondere eine hydraulische Kolbenfläche für die hydraulische Kraft für die Verkleinerungsbewegung aufweist,
und/oder
wobei der erste Balg und das Durchlasselement in Reihe im Strömungsweg oder Durchlass des Fluids angeordnet sind, wobei der erste Balg vorzugsweise stromabwärts des Durchlasselements angeordnet ist.

14. Druckregelungsanordnung (1) umfassend eine Druckminderungsvorrichtung (7) nach einem der vorhergehenden Ansprüche und wenigstens ein Filterelement (25) zum Filtern von Partikeln aus dem Fluid (L), wobei das Filterelement (25) wenigstens ein oberes Verschlusselement (38) umfasst, das wenigstens teilweise als das Blendenelement der Druckminderungsvorrichtung (7) vorgesehen ist, wobei das Filterelement (25) vorzugsweise einen im Wesentlichen zylindrischen Filterkörper umfasst, insbesondere zumindest teilweise mit einem Sieb (27) versehen ist, wobei das obere Verschlusselement (38) das Filterelement (25) zumindest in einem Endabschnitt des Filterelements (25), der benachbart zu dem Durchlasselement (14) angeordnet ist, teilweise flüssigkeitsdicht verschließt und/oder dass das Filterelement (25) Rippenelemente (26) umfasst, die Stützen (26) bilden, die lösbar an dem starren Element (8), vorzugsweise an einem von dem starren Element (8) gebildeten Sitz (24), fixierbar sind.

## Revendications

1. Dispositif de réduction de pression (7) pour réduire la pression dans un fluide, en particulier un liquide (L) tel que l'eau, dans un dispositif d'irrigation, comprenant :
a) au moins un élément de passage (14) pour le passage du fluide (L) entre au moins un orifice d'entrée (32) et au moins un orifice de sortie (38),
b) au moins un élément d'orifice (19) et
c) au moins un élément élastique (12),
d) dans lequel l'élément de passage (14) et l'élément d'orifice (19) sont mobiles l'un par rapport à l'autre de sorte que, de préférence dans une boucle de rétroaction, l'orifice d'entrée (32) est diminué en mouvant l'élément de passage (14) et l'élément d'orifice (19) l'un vers l'autre dans un mouvement de diminution (DM) lorsque la pression du fluide (L) se trouve dans un premier intervalle de pression et/ou est égale ou supérieure à un seuil de pression donné, et que l'orifice d'entrée (32) est augmenté en éloignant l'élément de passage (14) et l'élément d'orifice (19) l'un de l'autre dans un mouvement d'augmentation (IM), lorsque la pression du fluide (L) se trouve dans un deuxième intervalle de pression en dessous du premier intervalle de pression et/ou est en dessous du seuil de pression,
e) dans lequel l'au moins un élément élastique (12) supporte ou provoque avec sa force élastique, en particulier lors d'une déformation par étirement ou compression, le mouvement d'augmentation (IM) entre l'élément de passage (14) et l'élément d'orifice (19),
f) dans lequel au moins un élément élastique (12) est formé comme un premier soufflet (12) ayant plusieurs plis (112),
g) dans lequel un espace intérieur (22) du premier soufflet (12) forme un passage pour le fluide (L), les plis (112) formant une paroi ou enveloppe fermée ou étanche de l'espace intérieur (22) imperméable au fluide (L),
h) dans lequel le premier soufflet (12) est relié mécaniquement à l'élément de passage (14) ou est relié mécaniquement à l'élément d'orifice (19) ou forme au moins une partie de l'élément de passage (14),
i) dans lequel le dispositif de réduction de pression (7) comprend en outre au moins un élément rigide (8) pour supporter l'élément d'orifice (19), l'élément de passage (14) et l'élément élastique ou premier soufflet (12) et un deuxième soufflet (13),
**caractérisé en ce que**
ii) le dispositif de réduction de pression (7) est formé solidairement et/ou en une seule pièce et est produit simultanément dans un processus de formage,
j) dans lequel les plis (112) du premier soufflet (12) et en particulier du deuxième soufflet (13) sont disposés ou formés en hélice,
k) et dans lequel l'au moins un élément élastique (12) et l'élément de passage (14) sont constitués d'un matériau plastique élastique dans un processus de moulage de plastique.

2. Dispositif de réduction de pression selon la revendication 1, dans lequel une force hydraulique supporte ou provoque le mouvement de diminution (DM) entre l'élément de passage (14) et l'élément d'orifice (19), la force hydraulique étant générée, au niveau des zones de piston hydraulique de l'élément de passage (14) et/ou du premier soufflet (12), par la différence de pression (P₁ - P₀) entre la pression (P₁) du fluide (L) à l'intérieur de l'élément de passage (14) et/ou dans l'espace intérieur (22) du premier soufflet (12) d'une part et une pression externe (P₀) dans un espace extérieur (50) à l'extérieur de l'élément de passage (14) et/ou à l'extérieur du premier soufflet (12) d'autre part.

3. Dispositif de réduction de pression selon la revendication 2,
dans lequel au moins certains des plis (112) du premier soufflet (12) s'étendent avec leurs surfaces externes dans l'espace extérieur (50), dans lequel la pression externe prévaut, de sorte que la pression externe dans l'espace extérieur est appliquée aux surfaces externes de ces plis,
dans lequel l'espace intérieur (22) du premier soufflet (12) s'étend dans au moins certains de ces plis (112), de sorte que la pression du fluide dans l'espace intérieur est appliquée aux surfaces internes de ces plis (112),
par lequel de préférence les surfaces de ces plis (112) forment des zones de piston hydraulique en générant la force hydraulique et/ou en particulier les surfaces de ces plis peuvent, en moyenne ou lorsqu'elles sont intégrées, résulter en une zone de piston hydraulique moyenne ou efficace ou résiduelle pointant dans la direction du mouvement de diminution et étant donc efficace pour générer la force hydraulique pour le mouvement de diminution, lorsque la pression du fluide est supérieure à la pression externe dans l'espace extérieur.

4. Dispositif de réduction de pression selon la revendication 3, dans lequel une zone de piston hydraulique moyenne du premier soufflet étant perpendiculaire au mouvement de diminution et/ou à un axe longitudinal du premier soufflet et pointant dans la direction du mouvement de diminution et/ou vers l'élément d'orifice est supérieure à la somme des autres zones de piston hydraulique adjacentes à l'espace extérieur de l'élément de passage ou de n'importe quel autre élément mobile relié au soufflet étant perpendiculaire au mouvement de réduction ou à un axe longitudinal du soufflet et pointant dans la direction du mouvement d'augmentation et/ou loin de l'élément d'orifice.

5. Dispositif de réduction de pression selon l'une quelconque des revendications 1 à 4, dans lequel en tant qu'élément élastique ultérieur l'au moins un deuxième soufflet (13) présente plusieurs plis (113) qui supportent ou provoquent avec leur force élastique, en particulier lors d'une déformation par compression ou étirement, le mouvement d'augmentation (IM) entre l'élément de passage (14) et l'élément d'orifice (19), dans lequel en particulier le deuxième soufflet (13) peut accumuler la force élastique dans le mouvement d'augmentation lors d'une déformation opposée à celle du premier soufflet (12),
dans lequel le deuxième soufflet (13) entoure de préférence au moins partiellement l'élément de passage (14) et/ou dans lequel de préférence un espace intermédiaire (23) entre l'élément de passage (14) et le deuxième soufflet (13) est ou peut être rempli avec le fluide (L) les plis (112) formant une paroi ou enveloppe fermée ou étanche de l'espace intermédiaire (23) imperméable au fluide (L), en particulier un joint étanche aux fluides vers l'espace extérieur (50),
ou
dans lequel en particulier un espace intérieur du deuxième soufflet (13) forme un passage pour le fluide (L), les plis (113) formant une paroi ou enveloppe fermée ou étanche de l'espace intérieur imperméable au fluide (L).

6. Dispositif de réduction de pression selon la revendication 5,
dans lequel au moins certains des plis (113) du deuxième soufflet (13) s'étendent avec leurs surfaces externes dans un ou l'espace extérieur (50), dans lequel la pression externe prévaut, de sorte que la pression externe dans l'espace extérieur est appliquée aux surfaces externes de ces plis,
dans lequel en particulier l'espace intermédiaire (23) ou espace intérieur du deuxième soufflet (13) s'étend dans au moins certains de ces plis (113), de sorte que la pression du fluide dans l'espace intermédiaire (23) ou espace intérieur est appliquée aux surfaces internes de ces plis (113),
dans lequel de préférence les surfaces de ces plis (113) forment des zones de piston hydraulique en générant une force hydraulique, en particulier dans la direction du mouvement d'augmentation.

7. Dispositif de réduction de pression selon l'une quelconque des revendications précédentes, dans lequel le fluide (L) a une pression d'entrée (Pᵥₐᵣ) avant d'entrer dans le(s) orifice(s) d'entrée (32), laquelle pression d'entrée (Pᵥₐᵣ) est supérieure à une pression de sortie (P₁) du fluide au niveau de l'orifice ou des orifices de sortie (38) et/ou dans lequel le seuil de pression est inférieur à la pression d'entrée et supérieur à la pression de sortie et de préférence supérieur à la pression externe dans l'espace extérieur.

8. Dispositif de réduction de pression (7) selon l'une quelconque des revendications précédentes, dans lequel le processus de formage est, en particulier un processus de moulage par injection, et/ou dans la même forme de traitement, en particulier un moule.

9. Dispositif de réduction de pression selon l'une quelconque des revendications précédentes, dans lequel les plis (112, 113) des soufflets (12, 13) sont disposés ou formés en hélice de sorte à permettre un retrait par rotation ou par dévissage du soufflet (12, 13) de la forme de traitement et/ou au moins un élément élastique (13) et/ou l'élément de passage (14) sont constitués d'un matériau élastomère plastique, en particulier un matériau élastomère thermoplastique, en particulier partiellement cristallin.

10. Dispositif de réduction de pression (7) selon l'une quelconque des revendications précédentes, dans lequel l'au moins un élément rigide (8) est produit dans un processus de moulage par injection, et/ou dans la même forme de traitement, en particulier un moule, dans lequel de préférence l'élément d'orifice (19) est attaché de manière fixe à l'élément rigide (8) et dans lequel de préférence l'élément de passage (14) est attaché à l'élément rigide (8) de sorte que ledit élément de passage (14) peut se déplacer vers et loin de l'élément d'orifice (19), en particulier en ce que l'élément de passage (14) est attaché à l'élément rigide (8) à travers l'élément élastique ou premier soufflet (12) et en particulier aussi le deuxième soufflet (13).

11. Dispositif de réduction de pression (7) selon l'une quelconque des revendications précédentes, dans lequel ledit élément d'orifice (19) peut être disposé à au moins deux distances différentes (O₁, O₂) par rapport à l'élément de passage (14), dans une position de repos ou d'équilibre de l'élément de passage (14), en particulier avec une différence de pression (P₁ - P₀) étant zéro, en variant ainsi l'orifice d'entrée (32) pour définir le deuxième intervalle de pression et/ou le premier intervalle de pression et/ou le seuil de pression.

12. Dispositif de réduction de pression (7) selon l'une quelconque des revendications précédentes, dans lequel ledit élément d'orifice (19) est disposé à l'intérieur de et/ou est relié à, en particulier à travers des toiles (20), une portion de fixation (30), dans lequel la portion de fixation (30) est fixée de manière amovible à l'élément rigide (8), en particulier à un logement (24) formée par l'élément rigide (8), en particulier par une connexion par enfichage ou un connexion par encliquetage ou par une connexion par filetage et/ou en ce que l'élément d'orifice (19) est solidairement relié à l'élément rigide (8), en particulier par une charnière solidaire qui permet de fixer et libérer la portion de fixation (30) à et d'une position de fonctionnement au niveau de, à l'intérieur de ou sur l'élément rigide (8), dans lequel en particulier l'élément d'orifice (19) peut être disposé à au moins deux distances différentes (O₁, O₂) de l'élément de passage (14), dans une position de repos ou d'équilibre de l'élément de passage (14), en particulier avec une différence de pression (P₁ - P₀) étant zéro, en disposant la portion de fixation (30) dans au moins deux positions différentes par rapport à l'élément rigide (8), en particulier par un mouvement axial, en particulier par un mouvement de vissage dans ladite connexion par filetage, ou en tournant ou disposant la portion de fixation (30) à l'envers entre deux positions opposées au niveau de l'élément rigide (8), dans lequel l'élément d'orifice (19) est de préférence disposé de manière asymétrique à l'intérieur de la portion de fixation (30).

13. Dispositif de réduction de pression (7) selon l'une quelconque des revendications précédentes, dans lequel, de préférence pour fermer complètement l'orifice d'entrée, des surfaces d'arrêt ou de contact coopérantes sont fournies au niveau de l'élément de passage et de l'élément d'orifice, qui peuvent entrer en contact l'une avec l'autre, en fermant de préférence l'orifice d'entrée au moment du contact
et/ou
dans lequel l'élément de passage est formé comme un tube ou comme un piston creux et/ou est équipé d'une partie s'étendant vers l'extérieur telle qu'une bride comprenant en particulier une zone de piston hydraulique pour la force hydraulique pour le mouvement de diminution,
et/ou
dans lequel le premier soufflet et l'élément de passage sont disposées en série dans le chemin ou passage d'écoulement du fluide, le premier soufflet étant de préférence disposé en aval de l'élément de passage.

14. Agencement de réglage de pression (1) comprenant un dispositif de réduction de pression (7) selon l'une quelconque des revendications précédentes et au moins un élément de filtre (25) pour filtrer des particules du fluide (L) dans lequel l'élément de filtre (25) comprend au moins un élément de fermeture supérieur (38) qui est fourni au moins partiellement en tant qu'élément d'orifice du dispositif de réduction de pression (7), de préférence dans lequel l'élément de filtre (25) comprend un corps de filtre sensiblement cylindrique, en particulier au moins partiellement fourni d'un écran (27), dans lequel l'élément de fermeture supérieur (38) scelle partiellement l'élément de filtre (25) de manière étanche aux liquides au moins dans une section terminale de l'élément de filtre (25) qui est disposé adjacent à l'élément de passage (14) et/ou en ce que l'élément de filtre (25) comprend des éléments de nervure (26) formant des supports (26) qui peuvent être fixés de manière amovible à l'élément rigide (8), de préférence à un logement (24) formé par l'élément rigide (8).
